**Europäisches Patentamt**

(19) **European Patent Office**

**Office européen des brevets**

(11) Publication number : **0 333 706 B1**

# (12) EUROPEAN PATENT SPECIFICATION

(45) Date of publication of patent specification :
29.01.92 Bulletin 92/05

(51) Int. Cl.⁵ : **F24J 2/40, F24J 2/52, G01S 3/78**

(21) Application number : **87903389.2**

(22) Date of filing : **09.05.87**

(86) International application number :
**PCT/IT87/00043**

(87) International publication number :
**WO 88/04016 02.06.88 Gazette 88/12**

(54) **SELF-POSITIONING CARRIER WITH WIND SAFETY DEVICE FOR SOLAR PANELS.**

(30) Priority : **18.11.86 IT 8344086**

(43) Date of publication of application :
**27.09.89 Bulletin 89/39**

(45) Publication of the grant of the patent :
**29.01.92 Bulletin 92/05**

(84) Designated Contracting States :
**AT BE CH DE FR GB LI LU NL SE**

(56) References cited :
**EP-A- 0 041 455**
**WO-A-84/04152**
**FR-A- 2 440 526**
**FR-A- 2 468 857**
**US-A- 4 082 947**

(56) References cited :
**US-A- 4 172 739**
**US-A- 4 192 289**
**US-A- 4 227 513**
**US-A- 4 277 132**
**US-A- 4 324 947**

(73) Proprietor : **GOTTARDELLO, Egidio**
**Via Vittorio Veneto 14**
**I-33089 Villotta di Chions (IT)**

(72) Inventor : **GOTTARDELLO, Egidio**
**Via Vittorio Veneto 14**
**I-33089 Villotta di Chions (IT)**

(74) Representative : **D'Agostini, Giovanni, Dr.**
**D'AGOSTINI ORGANIZZAZIONE n. 17 via**
**G.Giusti**
**I-33100 Udine (IT)**

EP 0 333 706 B1

## Description

The present invention relates to a support structure for solar panels, having a safety device against wind.

Different types of solar panel carriers are known at the present state of art. An express reference is made to this end to the Italian application for utility industrial model n° 60512B85 filed on 20.12.1985.

These types of equipment present the inconvenience of having to be overdimensioned in order to adequately resist against wind as the blowing force cannot be foreseen. It is also known that the respective solar panels, according to their positioning, can present considerable resistance to wind passage, and therefore, even in the case of overdimensioning, it is always possible that in limit conditions the panels may be torn from their hinges and the respective equipment damaged.

The aim of the present invention is to eliminate the above-mentioned inconveniences, and to simplify the complete apparatus, utilizing an adjustable wind sensor means.
Adjustable wind sensor means utilized in this apparatus have been disclosed in FR-A-2440526, in which the respective sensor means comprises a pole mounted on a switch responsive of its inclination, being at the upper extermity of the pole a wind resistance means supported.
This solution being not reliable in particular for tightening problems on supporting switch in raining conditions.

The present innovation, according to the characteristics given in the attached claims, solves the problem by a support structure for solar panels, comprising an adjustable sensor means actuated by wind force which is able to transmit a command to said equipment so that the respective panel/s is/are horizontally positioned when the wind force exceeds a certain limit, characterized in that the wind force sensor means comprises a vane or flap panel mouted at the upper edge thereof to a horizontal shaft and being freely rotatable around said shaft such that it is deflected from a neutral vertical position to an extent depending on the wind force, an adjustable cam fixed to the vane and rotating therewith around said shaft and a switch actuated by said cam.

The advantages obtained from this solution consist essentially in the fact that the solar panel structure can be installed in all conditions and positions independently of the climatic zone and of the wind conditions in said zone. As to the action of the wind within a certain, predetermined and adjustable limit, the panels will automatically position themselves horizontally, thus opposing a minimum resistance to the wind.

Conveniently the panel carrier supports an orthogonal from solar panel/s oriented four photocells in cross partition supported means associated to vertical and horizontal orientation devices to orient the respective solar panel/s in the sun direction. With this solution the structure is very simplified allowing production at low costs.

The invention is hereafter explained in more detail with the help of the drawings showning one of the preferential solutions for realization, the execution details of which are not to be held as limiting but only as examples.

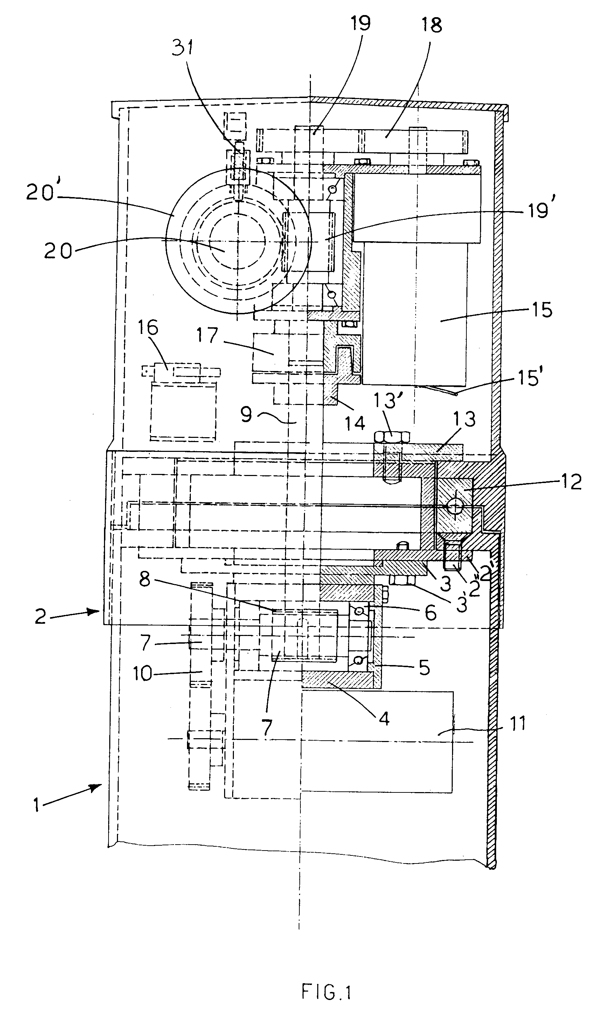

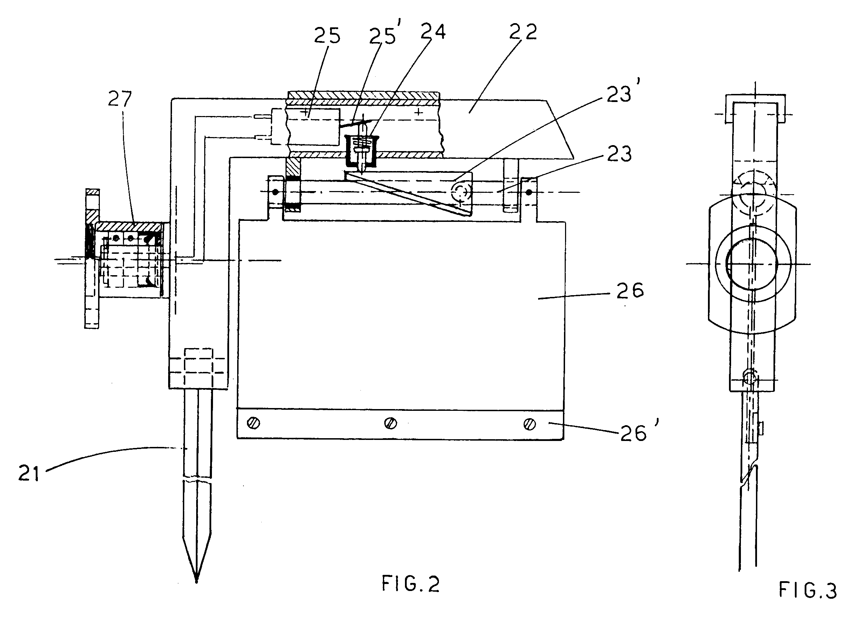

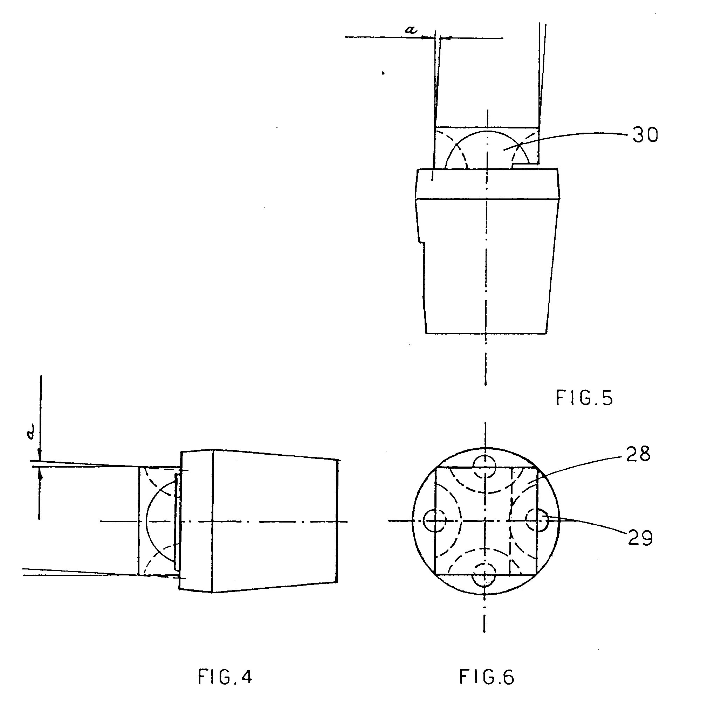

Figure n°1 gives a partial view of the solar panel carrying column in axial semi-section so as to visualize the respective orientation devices; Figures nos. 2 and 3 respectively represent the front schematic view in axial and side semi-section of the means which is the wind force sensor and sender of the signal to lower the solar panels; Figures nos. 4,5,6 give schematic side and top views (fig. 6) of the photocell device which activates the respective operation of said orientation device comprising two step motors which determine the positioning of the solar panels depending on the rays of the sun so that the former are perpendicular to the latter.

As can be seen from the above-mentioned figures, the invention foresees the use of a column carrying the respective panel carrier structure which comprises a lower upright or semicolumn (1) which bears and is partially covered by a pivoting upper semicolumn (2).
The lower column (1) bears a horizontal motor (11) which with gear transmission (10) transmits a slow movement to a horizontal, overhanging shaft (7) mounted on bearings (6) and hermetically closed (5), which by worm screw (7′) transmits the ulteriorly reduced movement to a shaft (9) which is upper protruding, vertical positionned and coaxial with the lower semi-column (1) which protrudes further than the head of the lower column (1) to transmit the respective rotating movement to the upper semi-column; all this is born by a drilled flange stock (3) with screws (3′) to a supporting plate (2′) screwed (2″) to the head of the lower semi-column (1), the drilled flange stock (3) jutting cylindrically over the head of said lower semi-column (1) so as to be inserted in a thrust bearing (12) and a ring flange obtained from the section in the upper part of the respective lower semi-column (1) to clamp it by a counterflange (13) with screws (13′).
Said upper semi-column (2) bears a vertical motor (15) fixed on an axial guide and support (14), having an underneath contact fin (15′) which actuates a limit and/or reversal switch (16) after a certain angle of rotation.
Said upper motor (15) transmits the movement by gears (18) to an upper, axial shaft (19) which, in turn, transmits the movement by worm gear (19′-20′) to a horizontal shaft (20) carrying the solar panel frame, the rotation being controlled by switch (31).

The control of the movements of the respective motors for the vertical and horizontal rotation is actuated by the solar orientation control device having four photo-electric cells as in fig. 4, 5, 6 which is arranged with its axis othogonal to the respective solar panels being above the four photo-electric cells (29), arranged in a cross with vertical and horizontal axis, overhung by a conveniently distanced darkening plate (28) which tends to cover half of the respective photocells in respect to the vertical, activating them in function of a certain angle (a) so that they are able to emit respective impulses in function of the solar rays which activate them, thus commanding the respective horizontal and vertical motors so as to maintain the panels always in a perpendicular position towards the sun.

According to the invention, the wind sensor means (fig. 2,3) is arranged by a sliding bar (21) or by clamping flange (27) on the side of the installation. Said means comprises a bearing structure (22) with a switch (25) which is actuated by a spring pushbutton (24) which, in turn, is actuated by an adjustable cam (23') which can be moved by longitudinal adjustment on an axis (23) to which a vane or flap panel is fixed which is freely self-positioning in vertical towards the bottom (26,26'). Said vane (flap 26-26'), depending on the wind force, rotates against the force of gravity which tends to keep it vertical; greater rotation will correspond to greater wind force. Therefore, upon adjustment of the cam position (23') the switch (25-25') will be eventually actuated and its closure of the circuit will work at least on the motor which determines the horizontal positioning to command the horizontal rotation of the respective solar panels.

## Claims

1. A support structure for solar panels, comprising an adjustable sensor means actuated by wind force which is able to transmit a command to said equipment so that the respective panel/s is/are horizontally positioned when the wind force exceeds a certain limit,
characterized in that the wind force sensor means comprises a vane or flap panel (26,26') mounted at the upper edge thereof to a horizontal shaft (23) and being freely rotatable around said shaft (23) such that it is deflected from a neutral vertical position to an extent depending on the wind force, an adjustable cam (23') fixed to the vane (26,26') and rotating therewith around said shaft (23) and a switch (24,25) actuated by said cam (23').

2. Support structure for solar panels according to claim 1, characterized in that:
– the adjustable cam (23') actuates the switch (25) to emit a certain electric signal when the wind force exceeds a given value corresponding to a predetermined limit and to suspend said signal or to emit another signal upon ceasing of said condition;
– a drive means receives said signal (15-31) and forces the respective panels to move from a respective, more or less slanted working position to a horizontal, or approximately horizontal, condition and restores the working position upon the ceasing of said signal or upon receiving the another signal from said switch.

3. Support structure for solar panels according to claim 2, characterized in that it comprises:
– a column carrying the respective panel carrier structure which comprises a lower semi-column (1) carrying a pivoting, upper semi-column (2); the lower semi-column (1) carrying a horizontal motor (11) which with transmission (10) transmits a reduced movement to an overhanging, horizontal shaft (7) which through a worm gear (7') transmits an even more reduced movement to a shaft which is vertical and coaxial with the lower semi-column axis (9) which protrudes further than the head of the lower semi-column (1) to transmit the respective rotating movement to the upper semi-column (2), the upper semi-column (2) carrying a vertical motor (15) fixed on axial guide and support (14) having means of actuation with a certain rotation angle for a limit and/or reversal switch (16), and in which the respective second motor (15) transmits the movement (18) to an upper, axial shaft (19) which, in turn, transmits the reduced movement by a worm gear (19'-20) to a horizontal shaft (20) carrying a frame supporting the solar panel/s, the rotation being controlled by a switch (31).

4. Support structure for solar panels according to claim 3, characterized in that the movements of the respective motors for the vertical and horizontal rotation are controlled by a device having four photo-electric cells (29) which is arranged with its axis orthogonal to the respective solar panel/s, the four photo-electric cells (29) being placed above the solar panel/s and, arranged in a cross with vertical and horizontal axis, overhung by a conveniently distanced darkening plate (28) which tends to half cover the respective photocells in respect to the vertical, activating them in function of a given angle (a), so that they are able to emit respective impulses in function of the solar rays which activate them, and commanding the respective horizontal and vertical motors in order to keep the panels always positioned towards the sun.

## Patentansprüche

1. Eine Trägerstruktur für Sonnenkollektoren, die einen verstellbaren Meßfühler umfaßt, der durch den Wind angetrieben wird und auf die besagte Einrichtung einen Befehl übertragen kann, so daß der oder die Sonnenkollektoren horizontal ausgerichtet wird/werden, wenn die Windstärke eine bestimmte Grenze überschreitet,

gekennzeichnet dadurch, daß der Windstärken-Meßfühler eine Dachfahne oder Klappplatte (26, 26') umfaßt, die an dessen Oberkante an einem horizontalen Scharnier (23) befestigt und frei drehbar um dieses Scharnier (23) ist, so daß es von einer neutralen vertikalen Position in eine geschwenkte übergeht, je nach Windstärke, sowie eine verstellbare Nocke (23'), die an der Klappplatte (26, 26') befestigt ist und mit ihr um besagtes Schamier (23) rotiert, wie auch einen Schalter (24, 25), der von besagter Nocke (23') betätigt wird.

2. Trägerstruktur für Sonnenkollektoren nach Anspruch 1, gekennzeichnet dadurch:
– daß die verstellbare Nocke (23') den Schalter (25) betätigt, um ein bestimmtes elektrisches Signal auszustrahlen, wenn die Windstärke einen vorgegebenen Wert überschreitet, der einer vorher bestimmten Grenze entspricht, und nach Ende dieser Situation das Signal auszusetzen oder ein anderes ertönen zu lassen:
– eine Antriebseinrichtung empfängt besagtes Signal (15-31) und bringt die Sonnenkollektoren aus einer mehr oder weniger angeschrägten Arbeitsposition in horizontale, oder angenähert horizontale, Lage; nach Ende des Signals oder bei Empfang eines anderen Signals von besagtem Schalter stellt sie die Arbeitsposition wieder her.

3. Trägerstruktur für Sonnenkollektoren nach Anspruch 2, gekennzeichnet dadurch, daß sie umfaßt:
– eine Säule, die besagte Trägerstruktur trägt, bestehend aus einer unteren Halbsäule (1), die eine schwenkbare obere Halbsäule (2) trägt; die untere Halbsäule (1) transportiert einen horizontalen Motor (11), der mittels einer Übertragung (10) eine reduzierte Bewegung auf eine überhängenden horizontalen Kolben (7) überträgt, welcher mittels eines Schneckengetriebes (7') eine noch weiter reduzierte Bewegung auf einen Kolben überträgt, der vertikal und koaxial zu der Achse der unteren Halbsäule (9) liegt, die über den Kopf der unteren Halbsäule (1) herausragt, um die Rotationsbewegung auf die obere Halbsäule (2) zu übertragen; wobei die obere Halbsäule (2) einen vertikalen Motor (15) trägt, der auf einer axialen Trägerschiene (14) liegt, die einen Antrieb mit einem bestimmten Rotationswinkel für einen Grenztaster und/oder Umkehrschalter (16) aufweist und in der der besagte zweite Motor (15) die Bewegung (18) auf einen oberen, axialen Kolben (19) überträgt, der seinerseits die reduzierte Bewegung über ein Schneckengetriebe (19'-20) auf einen horizontalen Kolben (20) überträgt, der ein Stützgestell für den/die Sonnenkollektor/en trägt, wobei die Bewegung durch einen Schalter (31) kontrolliert wird.

4. Trägerstruktur für Sonnenkollektoren nach Anspruch 3, gekennzeichnet dadurch, daß die Bewegungen der Motoren für die vertikale und die horizontale Rotation von einer Einrichtung kontrolliert werden, die vier Fotozellen (29) aufweist und mit ihrer Achse orthogonal zu dem/den Sonnenkollektoren ausgerichtet ist, wobei die vier Fotozellen (29) oberhalb des/der Sonnenkollektoren liegen, überkreuz mit einer horizontalen und einer vertikalen Achse angelegt sind und, in angemessener Entfernung, von einer Verdunkelungsplatte (28) überhangen werden, die dazu tendiert, die Fotozellen zur Vertikale halb zu überdecken, und sie in Abhängigkeit von einem vorgegebenen Winkel (a) aktiviert, so daß sie je nach Sonnenstrahlen Impulse ausstrahlen und den vertikalen und den horizontalen Motor steuern können, um die Kollektoren stets auf die Sonne ausgerichtet zu halten.

**Revendications**

1. Une structure de support pour panneaux solaires comprenant un détecteur réglable actionné par la force du vent et capable de transmettre des commandes à l'appareil afin que le/les panneau/x soit/soient mis en position horizontale lorsque la force du vent dépasse une certaine vitesse,

caractérisée par le fait que le détecteur actionné par la force du vent comprend une girouette ou plaque à charnière (26, 26') fixée sur une charnière sur son bord supérieur (23) et pivotant librement autour de lui de manière à dévier d'une position neutre horizontale en fonction de la force du vent, ainsi qu'une came réglable (23') fixée à la plaque à charnière (26, 26') et pivotant avec elle autour de ladite charnière (23), et un interrupteur (24, 25) actionné de ladite came (23').

2. Structure de support pour panneaux solaires selon revendication 1., caractérisée par le fait que:
– la came réglable (23') actionne l'interrupteur (25), émettant ainsi un certain signal électrique lorsque la force du vent dépasse une valeur donnée qui correspond à la limite prédeterminée, et pour suspendre ce signal, émettant un autre signal à la fin de ladite condition;
– un moyen d'actionnement reçoit ledit signal (15-31) et fait pivoter les panneaux d'une position de travail plus ou moins inclinée dans une position horizontale, ou presque horizontale; lorsque le signal cesse ou lorsque ledit interrupteur en émet un autre, les panneaux se remettent en position de travail.

3. Structure de support pour panneaux solaires selon revendication 2., caractérisée par le fait qu'elle comprend:
– une colonne soutenant ladite structure de support et comprenant une demi-colonne inférieure (1) supportant une demi-colonne supérieure pivotante (2); la demi-colonne inférieure (1) soutient un moteur horizontal (11) qui à l'aide d'une transmission (10) imprime un mouvement réduit à un arbre horizontal saillant (7) lequel, par le biais d' une transmission à vis sans fin (7') transmet un mouvement encore plus réduit à un arbre vertical et coaxial à l'axe de la demi-colonne inférieure (9) qui saillit au-delà la tête de la demi-colonne inférieure (1) pour transmettre le mouvement de la rotation sur la colonne supérieure (2); sur la colonne supérieure (2) se trouve un moteur vertical (15) situé sur un rail axial de support (14) qui présente un moyen d'actionnement avec un certain angle de rotation pour un interrupteur-limiteur et/ou un disjoncteur-inverseur (16) et dans lequel le second moteur (15) transmet un mouvement réduit au moyen d'une transmission à vis sans fin (19'-20) à un arbre horizontal (20) portant un encarde qui soutient le/les panneau/x solaire/s; la rotation est contrôlée par un interrupteur (31).

4. Structure de support pour panneaux solaires selon revendication 3., caractérisée par le fait que les mouvements des moteurs pour les rotations verticale et horizontale sont contrôlés par un dispositif à quatre cellules photoélectriques (29) et dont l'axe est disposé orthogonalement par rapport au/aux panneau/x solaire/s; les quatre cellules photoélectriques (29) sont placées au-dessus du/des panneau/x solaire/s , disposées en forme de croix, avec un axe vertical et un axe horizontal, et surplombées à une distance appropriée par une place obscurante (28) qui tend à couvrir les cellules photoélectriques à moitié en correspondance avec la verticale et les active en fonction d'un angle donné (a) de façon qu'elles puissent émettre des impulsions selon les rayons du soleil qui les activent, et piloter les moteurs verticaux et horizontaux afin de maintenir les panneaux positionnés vers le soleil en permanence.

FIG.1

FIG.2

FIG.3

a

30

FIG.5

a

28

29

FIG.4

FIG.6